# EUROPÄISCHE PATENTSCHRIFT

(11) **EP 2 533 997 B1**
(45) Veröffentlichungstag und Bekanntmachung des Hinweises auf die Patenterteilung: **26.02.2014**
(21) Anmeldenummer: 10790642.2
(22) Anmeldetag: 09.12.2010
(51) Int. Cl.: G02F 1/1333, B60K 37/02, B60K 35/00, G01D 11/28, G02B 5/30, G02F 1/1335

(54) **ANZEIGEELEMENT FÜR EINE ANZEIGEEINHEIT IN EINEM FAHRZEUG**
DISPLAY ELEMENT FOR A DISPLAY UNIT IN A VEHICLE
ÉLÉMENT D'AFFICHAGE POUR UNE UNITÉ D'AFFICHAGE DANS UN VÉHICULE

(30) Priorität: 10.02.2010 DE 102010007387
(43) Veröffentlichungstag der Anmeldung: 19.12.2012
(73) Patentinhaber: Johnson Controls Automotive Electronics GmbH, 75196 Remchingen (DE)
(72) Erfinder: SÜSS, Manfred, 75196 Remchingen (DE)
(74) Vertreter: Liedtke, Markus
(86) Internationale Anmeldenummer: PCT/EP2010/069255
(87) Internationale Veröffentlichungsnummer: WO 2011/098171

(56) Entgegenhaltungen:
- EP-A1- 1 873 001
- DE-A1-102005 059 092
- DE-C1- 4 427 173

## Beschreibung

Die Erfindung betrifft ein Anzeigeelement für die Anzeigeeinheit eines Fahrzeuges, wobei das Anzeigeelement mittels mindestens einer Lichtquelle hinterleuchtet werden kann.

Das Anzeigeelement ist vorzugsweise Bestandteil der Anzeigeeinheit einer Multifunktionsanzeigeeinheit von Kraftfahrzeugen.

In DE 10 2006 038 175 A1 ist eine Anzeigevorrichtung für ein Kraftfahrzeug mit einer Anzeigefläche beschrieben, die einen Symbolbereich zur Darstellung fest vorgegebener Symbole aufweist. Zur Darstellung von variablen Anzeigeinhalten ist zusätzlich ein Matrixbereich vorgesehen. Der Matrixbereich weist vorzugsweise ein Flüssigkeitskristallanzeigeelement auf.

Ferner ist aus DE 198 04 150 B4 ein Verfahren zur Aufbringung von Farbfiltern und/oder Abdeckmatrizen aus Fotoemulsionsschichten sowie ein Laminat zum Aufbringen mit Fotoemulsionsschichten bekannt. Bei diesem Verfahren werden die Farbfilter und/oder Abdeckmatrizen, die aus mindestens einer Fotoemulsionsschicht bestehen, auf ein starres Substrat aufgebracht. Als Substrat dient vorzugsweise ein für den Aufbau einer Flüssigkristallanzeige verwendetes Glassubstrat, bei dem die wenigstens eine Fotoemulsionsschicht auf eine Seite einer flexiblen Polarisatorfolie aufgebracht wird. Auf die andere Seite der Polarisatorfolie ist eine Kleberschicht aufgebracht, wobei das Schichtengebilde mit der auf die Polarisatorfolie aufgebrachten Kleberschicht auf das Substrat laminiert wird.

Die DE 10 2005 059092 A1 zeigt ein Anzeigeelement mit den Merkmalen des Oberbegriffs des Anspruchs 1.

Aufgabe der vorliegenden Erfindung ist es, ein gegenüber dem Stand der Technik verbessertes Anzeigeelement für eine Anzeigeeinheit eines Fahrzeuges anzugeben.

Die Aufgabe wird erfindungsgemäß durch die im Anspruch 1 angegebenen Merkmale gelöst.

Vorteilhafte Weiterbildungen der Erfindung sind Gegenstand der Unteransprüche.

An den Verbindungsstellen, insbesondere in den Randbereichen von aneinander liegenden Folien besteht durch das Eindringen von Feuchtigkeit zwischen die Folien die Gefahr, dass die Verbindung gelöst wird oder Störungen der zu betrachtenden Anzeigen auftreten.

Mit der erfindungsgemäßen Anordnung wird dieses Problem weitgehend beseitigt. Dabei wird über wenigstens ein elastisches Element Druck auf einen Teil des Randbereichs, in dem eine erste Komponente und eine zweite Komponente aneinandergrenzen, ausgeübt. Damit wird ein Anpressdruck auf die beiden Folien erzeugt, die eine gegenüber Feuchtigkeit abdichtende Flächenpressung zwischen den Komponenten erzeugt.

Bei der ersten Komponente handelt es sich um eine mit Kennzeichnungen versehene Folie, während es sich bei der zweiten Komponente um eine Polarisatorfolie handelt.

Das Anzeigeelement enthält eine mit Kennzeichnungselementen versehene Folie und eine Polarisatorfolie, die übereinanderliegend angeordnet sind und in ihren Randbereichen mit elastischen Elementen aufeinander gepresst sind. Die Folien liegen mit ihren Randbereichen auf dem umlaufenden Rand eines Basisteils auf. Als Kennzeichnungselemente können Skalen, Symbole und dergleichen aufgebracht sein.

Eine Weiterbildung der Erfindung sieht vor, dass die Kennzeichnungselemente auf die Folie aufgedruckt sind. Zweckmäßigerweise ist die Polarisatorfolie vor der Vorderseite der Folie angeordnet ist, so dass sie einem Betrachter des Anzeigeelementes zugewandt ist.

Vorzugsweise wird für die Polarisatorfolie eine Zirkularpolarisatorfolie verwendet.

In einer möglichen Ausführungsform weisen die Folie und die Polarisatorfolie weitgehend identische Abmessungen auf.

Eine weitere Ausgestaltung der Erfindung sieht vor, dass das elastische Element an einem Rahmen angeordnet ist. Dabei ist es zweckmäßig, dass die Form des Rahmens dem Rand der mit Kennzeichnungen versehenen Folie und/oder der Polarisatorfolie entspricht.

Das elastische Element kann als umlaufende Dichtung ausgebildet sein, welche auf dem Randbereich der Folien aufliegt oder aus einzelnen Druckstücken besteht.

Es vorteilhafte Ausführung sieht vor, dass am Rahmen Klemmelemente angeordnet sind, an denen elastische Druckstücke angebracht sind.

Die mit Kennzeichnungen versehene Folie und die Polarisatorfolie liegen mit ihren Randbereichen auf der Grundfläche eines Basisteils auf, so dass die von den elastischen Elementen aufgebrachten Druckkräfte dort abgestützt werden.

Im Folgenden werden unter Bezugnahme auf die beigefügten Zeichnungen Ausführungsformen der Erfindung beschrieben.

In den zugehörigen Zeichnungen zeigen:
- Figur 1: die Anzeigefläche eines Anzeigeinstrumentes;
- Figur 2: einen1 Schnitt durch die Anordnung von Figur 1;
- Figur 3: eine Darstellung zur Erläuterung der Funktionsweise der Druckerzeugung;
- Figur 4: eine Darstellung zur Erläuterung der Kraftwirkung;
- Figur 5: die Bestandteile einer Anzeigeanordnung in Explosionsdarstellung;
- Figur 6: ein vergrößertes Detail X aus Figur 5;
- Figur 7: ein Basisteil der Anzeige-Anordnung in perspektivischer Darstellung;
- Figur 8: einen Ausschnitt des Basisteils gemäß Figur 7;
- Figur 9: eine Einzelheit Y aus Figur 8
und
- Figur 10: eine Einzelheit Z aus Figur 8.

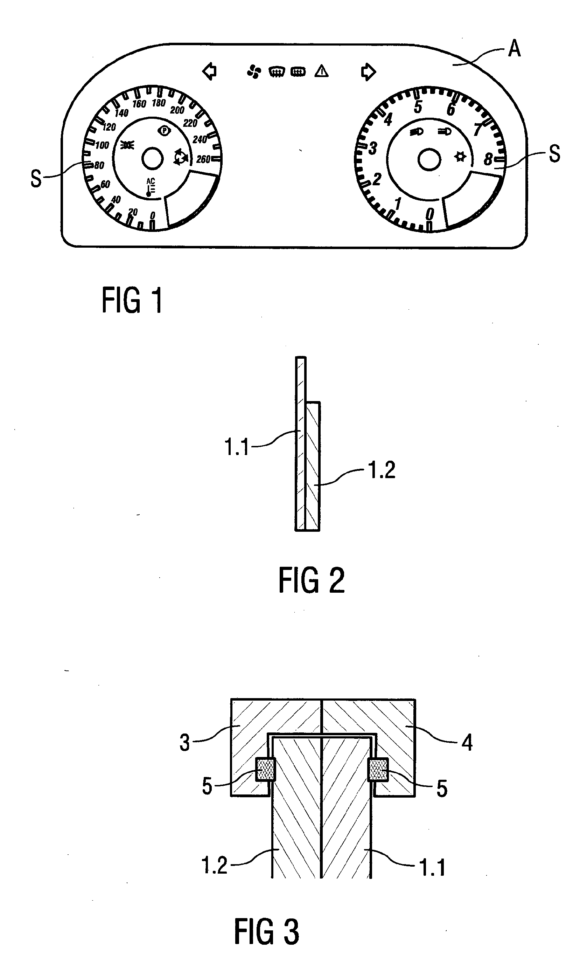

Figur 1 zeigt die Vorderansicht eines Anzeigeelementes 1 einer Anzeigeeinheit für ein Fahrzeug, wobei die Anzeigeeinheit Bestandteil einer Multifunktionsanzeigeeinheit sein kann. Auf dem Anzeigeelement 1 sind zwei Skalenanzeigen, Richtungsanzeiger und grafische Symbole zur Information des Fahrers dargestellt.

Das Anzeigeelement 1 ist mittels wenigstens einer, hier nicht dargestellten, Lichtquelle beleuchtbar, die hinter dem Anzeigeelement 1 angeordnet ist. Die Skalenanzeigen werden, sofern die Zündung oder das Fahrzeuglicht eingeschaltet ist, beleuchtet, wobei beispielsweise bei Betätigen eines Betätigungshebels zur Anzeige der Fahrtrichtung die entsprechende Richtungsanzeige beleuchtet ist und der Richtungsanzeiger blinkt. Die grafischen Symbole des Anzeigeelementes 1 sind bei Aktivierung und/oder Deaktivierung der entsprechenden Funktion beleuchtet.

**Figur 2** zeigt einen Schnitt durch die Anordnung von Figur 1. Das Anzeigeelement 1 besteht aus einer bedruckten Folie 1.1 und einer Polarisatorfolie 1.2, wobei auf der bedruckten Folie 1.1 die Skalenanzeigen, die Richtungsanzeiger und die grafischen Symbole aufgebracht sind.

Die Polarisatorfolie 1.2 ist eine Zirkular-Polarisatorfolie und befindet sich vorzugsweise neben der bedruckten Seite der Folie 1.1, welche dem Betrachter des Anzeigeelementes 1 zugewandt ist, d. h. die Polarisatorfolie 1.2 ist dem Betrachter zugewandt angeordnet und für diesen sichtbar.

Durch die Wirkung der Polarisatorfolie 1.2 ist das unbeleuchtete Anzeigeelement 1 nicht sichtbar, da durch die Polarisatorfolie 1.2 verhindert ist, dass von dem Anzeigeelement 1 reflektiertes Licht für den Betrachter sichtbar wird. Darüber hinaus ist mittels der Polarisatorfolie 1.2 der Transmissionsgrad des von der Lichtquelle abgestrahlten Lichtes erhöht. Ist die Zündung oder das Fahrzeuglicht nicht eingeschaltet, erscheint das Anzeigeelement 1 in homogenem Schwarz, die Skalenanzeigen und/oder die grafischen Symbole werden erst bei Aktivierung der Lichtquelle sichtbar, was als so genannter Black-Panel-Effekt bezeichnet wird. Die Polarisatorfolie 1.2 kann mit der bedruckten Folie 1.1 verklebt oder laminiert sein. Alternativ dazu kann die Polarisatorfolie 1.2 auch ohne stoffschlüssige Verbindung auf der bedruckten Folie 1.1 liegen.

**Figur 3** erläutert das Funktionsprinzips der Druckerzeugung. Die zur Gestaltung der Anzeigefläche eines Fahrzeug-Anzeigeinstrumentes mit Kennzeichnungen versehene Folie 1.1, die zum Beispiel aus Makrofol der Firma Bayer besteht, und eine vordere, dem Fahrer zugewandte zirkular polarisierte Polarisatorfolie 1.2 sind benachbart angeordnet. In ein linkes Halteteil 3 und ein rechtes Halteteil 4 ist jeweils ein elastisches Element 5 integriert. Beim Zusammendrücken der beiden Halteteile 3 und 4 wird über die elastischen Elemente 5 Druck auf den Randbereich, in dem die bedruckte Folie 1.1 und die Polarisatorfolie 1.2 aneinander grenzen, ausgeübt und so ein definierter Anpressdruck erzeugt. Der Anpressdruck bewirkt eine Flächenpressung zwischen der bedruckten Folie 1.1 und der Polarisatorfolie 1.2, so dass die seitlichen Ränder der zusammenstoßenden Folien 1.1 und 1.2 gegenüber Feuchtigkeit abgedichtet sind. Die Halteteile 3 und 4 können im gegeneinander gedrückten Zustand miteinander verbunden werden, zum Beispiel durch eine Klippverbindung. Als elastische Elemente werden vorzugsweise Bauteile aus Gummi oder anderen elastischen Werkstoffen verwendet, es können aber auch Federn eingesetzt werden.

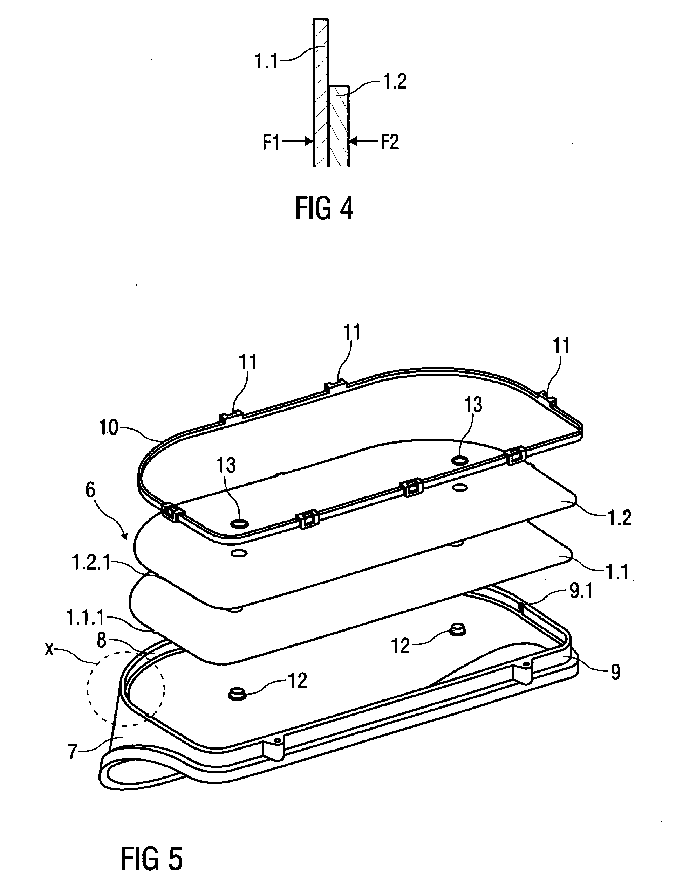

Die Wirkungslinien und die Richtungen der Kräfte F1 und F2, die von den elastischen Elementen 5 auf die Randbereiche der Folien 1.1 und 1.2 ausgeübt werden, um den Druck für die genannte Flächenpressung aufzubauen, sind in Figur 4 dargestellt. Die Wirkungslinien der Kräfte F1 und F2 verlaufen senkrecht zu den Oberflächen der Folien 1.1 und 1.2.

**Figur 5** zeigt in einer Explosionsdarstellung eine Anzeigeanordnung 6 als Bestandteil eines in einem Fahrzeug-Cockpit zu verbauenden Anzeigeinstrumentes. Die Anzeigeanordnung 6 enthält ein Basisteil 7 mit einer ebenen Grundfläche 8, an der sich senkrecht dazu eine Wandung 9 befindet. Die sich über den Umfang der Grundfläche 8 erstreckende Wandung 9 überragt das Niveau der Grundfläche 8. Die Folie 1.1 und die Polarisatorfolie 1.2 werden übereinander liegend in das Basisteil 7 eingefügt. Ein Rahmen 10 drückt im montierten Zustand auf die Ränder der Folien 1.1 und 1.2. Die äußere Form des Rahmens 10 entspricht der Form der Grundfläche 8 des Basisteils 7. Der Druck wird mit elastischen Elementen 5 auf die Folien 1.1 und 1.2, die auf der Grundfläche 8 aufliegen, übertragen. An der Wandung 9 sind Klemmelemente 11 befestigt. Im dargestellten Beispiel ist die Befestigung lösbar ausgeführt und wird durch einen Kraftschluss zwischen Klemmelementen 11 und Wandung 9 gesichert. Zur Verbesserung der Lagesicherung können die Folien 1.1 und 1.2 Vorsprünge 1.1.1, 1.2.1 aufweisen, die in korrespondierende Ausnehmungen 9.1 der Wandung 9 eingreifen.

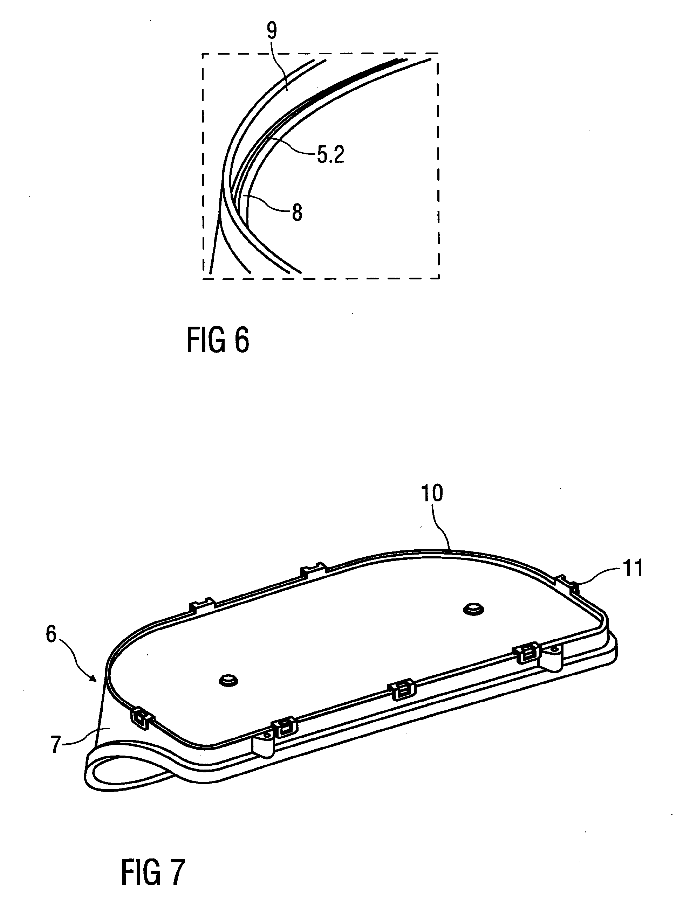

**Figur 6** zeigt ein vergrößertes Detail X aus Figur 5. Bei der hier dargestellten Ausführung liegt eine umlaufende elastische Dichtung 5.2 auf der nach innen ragenden Grundfläche 8 des Basisteils 7 auf. Die umlaufende elastische Dichtung 5.2 kann unterhalb und/oder oberhalb der Folien 1.1 und 1.2 angeordnet sein.

Es ist auch möglich, dass der Druck mit elastischen Druckstücken 5.1, die an den Klemmelementen 11 angebracht sind, auf die Folien 1.1 und 1.2, welche in ihren Randbereichen auf der Grundfläche 8 aufliegen, erzeugt wird.

In **Figur 7** ist die Anzeigeanordnung 6 im montierten Zustand perspektivisch dargestellt.

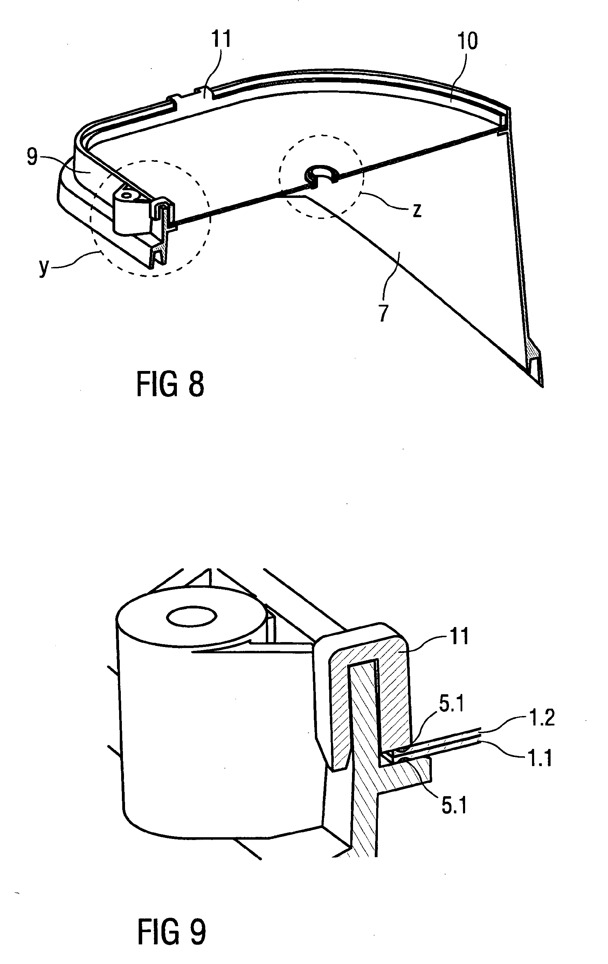

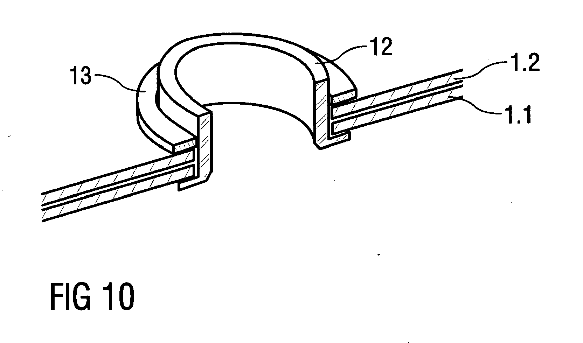

**Figur 8** zeigt einen Ausschnitt der Anzeigeanordnung 6 gemäß Figur 7 in teilweise aufgebrochener Darstellung. Die dort gekennzeichneten Einzelheiten Y und Z erläutern die Figuren 9 und 10.

In **Figur 9** ist das vergrößerte Detail Y dargestellt. Es zeigt ein Klemmelement 11, mit dem die elastischen Elemente 5 auf die Folien 1.1 und 1.2 gedrückt werden. Als elastische Elemente 5 können umlaufende elastische Dichtungen 5.2, wie die in Figur 6 dargestellte, verwendet werden oder es werden einzelne elastische Dichtstücke 5.1 angeordnet.

**Figur 10** zeigt vergrößert als Detail Z eine Buchse 12, die im inneren Bereich der Folien 1.1 und 1.2 angeordnet ist. Solche Buchsen 12 können beispielsweise zur Befestigung der Folien 1.1, 1.2 oder zum Erzeugen eines definierten Abstandes der Folien von der Anzeigefläche A dienen. Die Buchsen 12 umschließen Löcher, die in den Folien 1.1 und 1.2 angebracht sind. Die Buchsen 12 sind zylindrische Teile, die an ihrem unteren Ende so nach außen gebogen sind, dass sie auf die Folien 1.1 und 1.2 ragen. Auf der Oberseite werden sie mit einem Sicherungsring 13 fixiert.

### Bezugszeichen

- 1: Anzeigeelement
- 1.1: Folie mit Kennzeichnungselementen
- 1.2: Polarisatorfolie
- 1.1.1, 1.2.1: Vorsprung
- 3: linkes Halteteil
- 4: rechtes Halteteil
- 5: elastisches Element
- 5.1: Druckstück
- 5.2: umlaufende Dichtung
- 6: Anzeigeanordnung
- 7: Basisteil
- 8: Grundfläche
- 9: Wandung
- 9.1: Ausnehmungen
- 10: Rahmen
- 11: Klemmelement
- 12: Buchse
- 13: Sicherungsring

- A: Anzeige
- S: Skala

## Patentansprüche

1. Anzeigeelement (1) für die Anzeigeeinheit eines Fahrzeuges, wobei das Anzeigeelement (1) mittels mindestens einer Lichtquelle hinterleuchtet werden kann, wobei das Anzeigeelement (1) eine mit Kennzeichnungselementen versehene Folie (1.1) und eine Polarisatorfolie (1.2) enthält, die übereinanderliegend angeordnet sind, **dadurch gekennzeichnet, dass** die Folien (1.1, 1.2) in ihren Randbereichen mit elastischen Elementen (5) aufeinander gepresst sind.

2. Anzeigeelement (1) nach Anspruch 1, **dadurch gekennzeichnet, dass** die Kennzeichnungselemente auf die Folie (1.1) aufgedruckt sind.

3. Anzeigeelement (1) nach Anspruch 1 oder 2, **dadurch gekennzeichnet, dass** die Polarisatorfolie (1.2) vor der Vorderseite der Folie (1.1) angeordnet ist, so dass sie einem Betrachter des Anzeigeelementes (1) zugewandt ist.

4. Anzeigeelement (1) nach einem der vorhergehenden Ansprüche, **dadurch gekennzeichnet, dass** die Polarisatorfolie (1.2) eine Zirkularpolarisatorfolie ist.

5. Anzeigeelement (1) nach einem der vorhergehenden Ansprüche, **dadurch gekennzeichnet, dass** die Folie (1.1) und die Polarisatorfolie (1.2) weitgehend identische Abmessungen aufweisen.

6. Anzeigeelement (1) nach einem der vorhergehenden Ansprüche, **dadurch gekennzeichnet, dass** das elastische Element (5) als umlaufende Dichtung (5.2) ausgebildet ist.

7. Anzeigeelement (1) nach einem der Ansprüche 1 bis 5, **dadurch gekennzeichnet, dass** das elastische Element aus einzelnen Druckstücken (5.1) besteht.

8. Anzeigeelement (1) nach einem der vorhergehenden Ansprüche, **dadurch gekennzeichnet, dass** das elastische Element (5) mittelbar oder unmittelbar mit einem Rahmen (10) verbunden ist.

9. Anzeigeelement (1) nach Anspruch 8, **dadurch gekennzeichnet, dass** die Form des Rahmens (10) dem Rand der Folie (1.1) und/oder der Polarisatorfolie (1.2) entspricht.

10. Anzeigeelement (1) nach einem der Ansprüche 8 oder 9, **dadurch gekennzeichnet, dass** am Rahmen Klemmelemente (11) angeordnet sind.

11. Anzeigeelement (1) nach Anspruch 10, **dadurch gekennzeichnet, dass** die elastischen Druckstücke (5.1) an den Klemmelementen (11) angebracht sind.

12. Anzeigeelement (1) nach einem der vorhergehenden Ansprüche, **dadurch gekennzeichnet, dass** die Folie (1.1) und die Polarisatorfolie (1.2) mit ihren Randbereichen auf der Grundfläche (8) eines Basisteils (7) aufliegen.

## Claims

1. Display element (1) for the display unit of a vehicle, it being possible to backlight the display element (1) by means of at least one light source, the display element (1) including a film (1.1), provided with identifying elements, and a polarizing film (1.2), which are arranged situated one above the other, **characterized in that** the films (1.1, 1.2) are pressed against one another in their edge regions with the aid of elastic elements (5).

2. Display element (1) according to Claim 1, **characterized in that** the identifying elements are printed onto the film (1.1).

3. Display element (1) according to Claim 1 or 2, **characterized in that** the polarizing film (1.2) is arranged upstream of the front side of the film (1.1) so that it faces a viewer of the display element (1).

4. Display element (1) according to one of the preceding claims, **characterized in that** the polarizing film (1.2) is a circularly polarizing film.

5. Display element (1) according to one of the preceding claims, **characterized in that** the film (1.1) and the polarizing film (1.2) have largely identical dimensions.

6. Display element (1) according to one of the preceding claims, **characterized in that** the elastic element (5) is designed as a circumferential seal (5.2).

7. Display element (1) according to one of Claims 1 to 5, **characterized in that** the elastic element comprises individual pressure pieces (5.1).

8. Display element (1) according to one of the preceding claims, **characterized in that** the elastic element (5) is connected indirectly or directly to a frame (10).

9. Display element (1) according to Claim 8, **characterized in that** the shape of the frame (10) corresponds to the edge of the film (1.1) and/or of the polarizing film (1.2).

10. Display element (1) according to either of Claims 8 and 9, **characterized in that** clamping elements (11) are arranged on the frame.

11. Display element (1) according to Claim 10, **characterized in that** the elastic pressure pieces (5.1) are fitted on the clamping elements (11).

12. Display element (1) according to one of the preceding claims, **characterized in that** the film (1.1) and the polarizing film (1.2) rest with their edge regions on the base surface (8) of a base part (7).

## Revendications

1. Elément d'affichage (1) pour unité d'affichage de véhicule, l'élément d'affichage (1) pouvant être rétro-éclairé au moyen d'au moins une source de lumière,
l'élément d'affichage (1) contenant un film (1.1) doté d'éléments d'identification et un film polarisant (1.2) disposés l'un au-dessus de l'autre,
**caractérisé en ce que**
les films (1.1, 1.2) sont repoussés l'un contre l'autre par des éléments élastiques (5) sur leur bordure.

2. Elément d'affichage (1) selon la revendication 1, **caractérisé en ce que** les éléments d'identification sont imprimés sur le film (1.1).

3. Elément d'affichage (1) selon les revendications 1 ou 2, **caractérisé en ce que** le film polarisant (1.2) est disposé en avant du côté avant du film (1.1) de telle sorte qu'il soit tourné vers l'observateur de l'élément d'affichage (1).

4. Elément d'affichage (1) selon l'une des revendications précédentes, **caractérisé en ce que** le film polarisant (1.2) est un film à polarisation circulaire.

5. Elément d'affichage (1) selon l'une des revendications précédentes, **caractérisé en ce que** le film (1.1) et le film polarisant (1.2) présentent des dimensions largement identiques.

6. Elément d'affichage (1) selon l'une des revendications précédentes, **caractérisé en ce que** l'élément élastique (5) est configuré comme joint d'étanchéité périphérique (5.2).

7. Elément d'affichage (1) selon l'une des revendications 1 à 5, **caractérisé en ce que** l'élément élastique est constitué de pièces imprimées (5.1) distinctes.

8. Elément d'affichage (1) selon l'une des revendications précédentes, **caractérisé en ce que** l''élément élastique (5) est relié directement ou indirectement à un encadrement (10).

9. Elément d'affichage (1) selon la revendication 8, **caractérisé en ce que** la forme de l'encadrement (10) correspond au bord du film (1.1) et/ou du film polarisant (1.2).

10. Elément d'affichage (1) selon l'une des revendications 8 ou 9, **caractérisé en ce que** des éléments de serrage (11) sont disposés sur l'encadrement.

11. Elément d'affichage (1) selon la revendication 10, **caractérisé en ce que** les pièces élastiques de poussée (5.1) sont placées sur les éléments de serrage (11).

12. Elément d'affichage (1) selon l'une des revendications précédentes, **caractérisé en ce que** le film (1.1) et le film polarisant (1.2) reposent par leur bordure sur la surface de base (8) d'une pièce de base (7).
